# EUROPEAN PATENT APPLICATION

(11) **EP 3 825 297 A1**
(43) Date of publication of application: **26.05.2021**
(21) Application number: 19837298.9
(22) Date of filing: 11.06.2019
(51) Int. Cl.: C04B 35/58, B23B 27/14, B23B 27/20, B23B 51/00, B23C 5/16

(54) **SINTERED BODY, POWDER, AND PRODUCTION METHOD FOR POWDER**

(30) Priority: 17.07.2018 JP 2018134072
(71) Applicant: SUMITOMO ELECTRIC INDUSTRIES, LTD., Osaka-shi, Osaka 541-0041 (JP)
(72) Inventor: ISHII, Akito, Osaka-shi, Osaka 541-0041 (JP); OKAMURA, Katsumi, Osaka-shi, Osaka 541-0041 (JP)
(74) Representative: Boult Wade Tennant LLP
(86) International application number: PCT/JP2019/023116
(87) International publication number: WO 2020/017191

(57) **Abstract**

The sintered material includes a powder-derived material containing one or both of a nitride and an oxynitride, each of which contains at least one first metal element selected from the group consisting of group 4 elements, group 5 elements and group 6 elements in the periodic table, the rate yl/xl of the atomic ratio yl of non-metal element atoms in the powder-derived material to the atomic ratio x1 of metal element atoms therein is greater than 1, and the powder-derived material has a cubic structure.

## Description

### TECHNICAL FIELD

The present disclosure relates to a sintered material, a powder, and a powder producing method. This application claims the benefit of priority to Japanese Patent Application No. 2018-134072 filed on July 17, 2018, the entire contents of which are incorporated herein by reference.

### BACKGROUND ART

One important property required for a cutting tool is wear resistance.

Therefore, developments have been carried out on materials so as to produce a cutting tool with excellent wear resistance.

Japanese Patent Laying-Open No. 2016-037648 (PTL 1) discloses a hard material that may be used to prepare a sintered material having excellent wear resistance. The disclosed hard material contains aluminum, nitrogen, and at least one element selected from the group consisting of titanium, chromium and silicon, and has a cubic rock salt structure.

### CITATION LIST

### PATENT LITERATURE

PTL 1: Japanese Patent Laying-Open No. 2016-037648

### SUMMARY OF INVENTION

According to an aspect of the present disclosure, a sintered material includes a powder-derived material containing one or both of a nitride and an oxynitride, each of which contains at least one first metal element selected from the group consisting of group 4 elements, group 5 elements and group 6 elements in the periodic table, the rate yl/xl of the atomic ratio yl of non-metal element atoms in the powder-derived material to the atomic ratio x1 of metal element atoms therein is greater than 1, and the powder-derived material has a cubic structure.

According to an aspect of the present disclosure, a powder contains one or both of a nitride and an oxynitride, each of which contains at least one first metal element selected from the group consisting of group 4 elements, group 5 elements and group 6 elements in the periodic table, the rate yl/xl of the atomic ratio yl of non-metal element atoms in the powder to the atomic ratio x1 of metal element atoms therein is greater than 1, and the powder has a cubic structure.

According to an aspect of the present disclosure, a powder producing method for producing the powder described above includes: preparing a first particle group which contains particles formed of at least one first metal element selected from the group consisting of group 4 elements, group 5 elements and group 6 elements in the periodic table; and subjecting the first particle group to a shock compression in a nitrogen atmosphere to produce the powder.

### DETAILED DESCRIPTION

### [Problem to be Solved by the Present Disclosure]

Although the sintered material produced from the hard material disclosed by PTL 1 has good wear resistance, it is required to further improve the wear resistance.

Therefore, an object of the present invention is to provide a sintered material having excellent wear resistance, a powder to be used as a raw material to produce a sintered material having excellent wear resistance, and a powder producing method for producing the powder.

### [Advantageous Effect of the Present Disclosure]

According to any aspect mentioned above, it is possible to provide a sintered material having excellent wear resistance, a powder to be used as a raw material to prepare the sintered material having excellent wear resistance, and a powder producing method for producing the powder.

### [Description of Embodiments of the Present Disclosure]

First, a description will be given on each aspect of the present disclosure.
(1) A sintered material according to an aspect of the present disclosure includes a powder-derived material containing one or both of a nitride and an oxynitride, each of which contains at least one first metal element selected from the group consisting of group 4 elements, group 5 elements and group 6 elements in the periodic table, the rate yl/xl of the atomic ratio yl of non-metal element atoms in the powder-derived material to the atomic ratio x1 of metal element atoms therein is greater than 1, and the powder-derived material has a cubic structure.
   The sintered material according to an aspect of the present disclosure may have excellent wear resistance.
(2) The rate yl/xl is preferably 1.1 or more and 1.3 or less, and thereby the wear resistance of the sintered material is further improved.
(3) The sintered material preferably further contains one or both of A1 and Si, and thereby the wear resistance of the sintered material is further improved.
(4) Preferably, the sintered material further contains at least one bonding compound at 0.5 vol% or more and 50 vol% or less in total, the bonding compound is composed of at least one second metal element selected from the group consisting of group 4 elements, group 5 elements and group 6 elements in the periodic table, and at least one element of carbon, nitrogen and oxygen, and the rate x2/y2 of the atomic ratio x2 of metal element atoms in the bonding compound to the atomic ratio y2 of non-metal element atoms therein is 1 or more.
   The bonding compound plays a role of a bonding phase in the sintered material. Thus, the bonding compound improves the strength of the sintered material, and thereby the wear resistance of the sintered material is further improved.
(5) The rate x2/y2 is preferably 1.04 or more and 1.06 or less, and thereby the wear resistance of the sintered material is further improved.
(6) The sintered material preferably further contains cubic boron nitride at 10 vol% or more and 97 vol% or less. Since cubic boron nitride has an extremely high hardness, if the sintered material contains cubic boron nitride, the hardness of the sintered material is increased, and thereby the wear resistance of the sintered material is improved.
(7) A powder according to an aspect of the present disclosure contains one or both of a nitride and an oxynitride, each of which contains at least one first metal element selected from the group consisting of group 4 elements, group 5 elements and group 6 elements in the periodic table, the rate yl/xl of the atomic ratio yl of non-metal element atoms in the powder to the atomic ratio x1 of metal element atoms therein is greater than 1, and the powder has a cubic structure.
   When the powder according to an aspect of the present disclosure is used as a raw material to produce a sintered material, the sintered material may have excellent wear resistance.
(8) The rate yl/xl is preferably 1.1 or more and 1.3 or less. When such a powder is used as a raw material to produce a sintered material, the sintered material may have excellent wear resistance.
(9) A powder producing method according to an aspect of the present disclosure is a method for producing the powder according to the above (7) or (8), and the method includes: preparing a first particle group which contains particles formed of at least one first metal element selected from the group consisting of group 4 elements, group 5 elements and group 6 elements in the periodic table; and subjecting the first particle group to a shock compression in a nitrogen atmosphere to produce the powder.

According to the powder producing method according to an aspect of the present disclosure, the obtained powder has a cubic structure.

### [Details of Embodiments of the Present Disclosure]

A sintered material, a powder, and a powder producing method according to an embodiment of the present disclosure will be described below with specific examples. In the present specification, when a compound is represented by a chemical formula, unless particularly specified, the atomic ratio includes any conventionally known atomic ratio, and is not necessarily limited to the stoichiometric range. For example, when a compound is simply represented as "TiN", the atomic ratio of "Ti" to "N" is not limited to 50:50, and it may be any conventionally known atomic ratio.

### <First Embodiment: Powder>

A powder according to an embodiment of the present disclosure contains one or both of a nitride and an oxynitride, each of which contains at least one first metal element selected from the group consisting of group 4 elements, group 5 elements and group 6 elements in the periodic table, the rate yl/xl of the atomic ratio yl of non-metal element atoms in the powder to the atomic ratio x1 of metal element atoms therein is greater than 1, and the powder has a cubic structure.

In the present embodiment, as examples of the first metal element, group 4 elements in the periodic table in the periodic table such as titanium (Ti), zirconium (Zr) and hafnium (Hf), group 5 elements in the periodic table such as vanadium (V), niobium (Nb) and tantalum (Ta), and group 6 elements in the periodic table such as chromium (Cr), molybdenum (Mo) and tungsten (W) may be given.

As examples of a nitride of the first metal element, titanium nitride (TiN), zirconium nitride (ZrN), hafnium nitride (HfN), vanadium nitride (VN), niobium nitride (NbN), tantalum nitride (TaN), chromium nitride (Cr2N), molybdenum nitride (MoN), and tungsten nitride (WN) may be given.

As examples of an oxynitride of the first metal element, titanium oxynitride (TiON), zirconium oxynitride (ZrON), hafnium oxynitride (HfON), vanadium oxynitride (VON), niobium oxynitride (NbON), tantalum oxynitride (TaON), chromium oxynitride (CrON), molybdenum oxynitride (MoON), and tungsten oxynitride (WON) may be given.

The powder may contain one kind of nitride or oxynitride of the first metal element or may contain a combination of two or more kinds of nitrides and oxynitrides. The total content of nitride or oxynitride of the first metal element in the powder is preferably 90 mass% or more, more preferably 95 mass% or more, and most preferably 100 mass% relative to the total mass of the powder.

The powder may contain one or both of A1 and Si. It is preferable that A1 and Si are solutionized in the powder. The content of A1 in the powder is preferably 1 atom% or more and 25 atom% or less, and more preferably 3 atom% or more and 15 atom% or less. The content of Si in the powder is preferably 1 atom% or more and 25 atom% or less, and more preferably 3 atom% or more and 15 atom% or less.

The powder may contain inevitable impurities. The content of the inevitable impurities is preferably 0 mass% or more and less than 10 mass%, more preferably 0 mass% or more and less than 5 mass% relative to the total mass of the powder.

The content of the metal element in the powder may be measured by ICP atomic emission spectrometry. The content of the non-metal element (nitrogen and oxygen) in the powder may be measured by gas analysis. When the powder is present in the sintered material as a powder-derived material, the sintered material is pulverized by a mill (for example, a vibratory disc mill RS200 manufactured by Retsch), and thereafter the ICP atomic emission spectrometry and the gas analysis are performed on the powder.

As an ICP atomic emission spectroscopic analyzer, for example "ICPS-8100" manufactured by Shimadzu Corporation may be used. As a gas analyzer, for example "EMG950" manufactured by Horiba may be used.

The rate yl/xl of the atomic ratio yl of non-metal element atoms in the powder to the atomic ratio x1 of metal element atoms therein is greater than 1. In the present specification, the atomic ratio x1 of metal element atoms refers to the ratio of the total number of metal element atoms to the total number of atoms in the powder, and is expressed by atom%. The atomic ratio yl of non-metal element atoms refers to the ratio of the total number of non-metal element atoms to the total number of atoms in the powder, and is expressed by atom%. Therefore, in the powder according to the present embodiment, the number of non-metal element atoms is larger than the number of metal element atoms. In the present specification, the term "non-metal element" refers to hydrogen, helium, neon, argon, krypton, xenon, radon, fluorine, chlorine, bromine, iodine, astatine, oxygen, sulfur, selenium, tellurium, nitrogen, phosphorus, arsenic, antimony, or carbon. The term "metal element" refers to any element other than the non-metal elements described above.

If the atomic ratio y1 of non-metal element atoms is larger than the atomic ratio x1 of metal element atoms in the powder, the hardness of the powder is increased, and when the powder is used as a raw material to produce a sintered material, it is possible to obtain a sintered material having excellent wear resistance. Although the reason therefor is not clearly understood, it is considered that when the atomic ratio yl of non-metal element atoms is larger than the atomic ratio x1 of metal element atoms in the powder, the covalent bonds between the non-metal atoms, i.e., the covalent bond between two nitrogen atoms, the covalent bond between a nitrogen atom and an oxygen atom, and the covalent bond between two oxygen atoms, are enhanced in the powder, and thereby, the hardness of the powder is increased.

The atomic ratio x1 of metal element atoms in the powder may be measured by ICP atomic emission spectrometry. Specifically, the powder is finely pulverized, and 1 g is selected as a measuring powder. The measuring powder is divided by the number of metal elements to be analyzed, and the atomic ratio of atoms of one metal element in all kinds of the metal elements to be analyzed is measured in each powder part. For example, when two kinds of metal elements are measured, 1 g of the measuring powder is divided into two parts, the two powder parts are denoted by powder part A and powder part B, respectively, the atomic ratio of atoms of one metal element is measured from powder part A, and the atomic ratio of atoms of the other metal element is measured from powder part B.

The measurement mentioned above is performed ten times for each element, and the average of the ten values is defined as the atomic ratio of atoms of one metal element in the powder. The atomic ratios of atoms of all the metal elements are summed, and the sum is defined as the atomic ratio of metal element atoms in the powder. As an ICP atomic emission spectroscopic analyzer, ICPS-8100 (trade name) manufactured by Shimadzu Corporation may be used.

The atomic ratio x1 of metal element atoms in the powder is preferably 43.48 atom% or more and 48.39 atom% or less, and more preferably 44.12 atom% or more and 46.88 atom% or less.

The atomic ratio yl of non-metal element atoms in the powder may be measured by gas analysis. Specifically, the powder is finely pulverized, and 1 g is selected as a measuring powder. The measuring powder is divided by the number of non-metal elements to be analyzed, and the atomic ratio of atoms of one non-metal element in all kinds of the non-metal elements to be analyzed is measured in each powder part. For example, when two kinds of non-metal elements are measured, 1 g of the measuring powder is divided into two parts, and the two powder parts are denoted by powder part 1 and powder part 2, respectively, the atomic ratio of atoms of one non-metal element is measured from powder part 1, and the atomic ratio of atoms of the other non-metal element is measured from powder part 2.

The measurement mentioned above is performed ten times for each element, and the average of the ten values is defined as the atomic ratio of atoms of one non-metal element in the powder. The atomic ratios of atoms of all the non-metal elements are summed, and the sum is defined as the atomic ratio of non-metal element atoms in the powder. As a gas analyzer, "EMG950" manufactured by Horiba may be used.

The atomic ratio yl of non-metal element atoms in the powder is preferably 56.52 atom% or more and 51.61 atom% or less, and more preferably 55.88 atom% or more and 53.13 atom% or less.

The rate yl/xl of the atomic ratio yl of non-metal element atoms to the atomic ratio x1 of metal element atoms is preferably more than 1 and not less than 1.33, more preferably 1.1 or more and 1.3 or less, and further preferably 1.13 or more and 1.27 or less.

The powder has a cubic structure. The cubic structure refers to a crystal structure, typically named as the rock salt (sodium chloride) structure, in which lattice points are present in each corner and each face center of a unit cubic lattice. Since the cubic structure has high hardness, when a powder having a cubic structure is used as a raw material to produce a sintered material, the sintered material may have excellent wear resistance.

The cubic structure in the powder may be determined by comparing its diffraction pattern obtained via XRD qualitative analysis with the corresponding diffraction pattern stored in the ICDD database. As an XRD device, "miniflex 600" manufactured by RIGAKU may be used.

Preferably, 90 vol% or more of the powder has a cubic structure, and more preferably 100 vol% of the powder, in other words, the entire powder has a cubic structure.

### <Second Embodiment: Sintered Material>

A sintered material according to an embodiment of the present disclosure contains a powder-derived material that is derived from the powder according to the first embodiment. Since the sintered material contains the powder-derived material derived from the powder having high hardness, it is excellent in wear resistance.

In the present specification, the powder-derived material refers to those components that are derived from the powder of the first embodiment and present in the sintered material when the sintered material is produced by using the powder of the first embodiment. The components of the powder and the content of each component are maintained the same after the sintering. Therefore, the powder-derived material in the sintered material obtained by sintering the powder have the same components and the same content of each component as the powder.

The sintered material may be made of only the powder-derived material. In other words, the content of the powder-derived material in the sintered material may be set to 100 vol%. The content of the powder-derived material in the sintered material may be, for example, 3 vol% or more and 99.5 vol% or less. In this case, in addition to the powder-derived material, other components such as a bonding compound and cubic boron nitride may be contained. The content of the other components in the sintered material may be, for example, 0.5 vol% or more and 97 vol% or less.

Preferably, the sintered material further contains one or both of A1 and Si. It is preferable that A1 and Si are solutionized in the sintered material. It is preferable that A1 and Si are solutionized in the powder-derived material. Thereby, the wear resistance of the sintered material is further improved. The content of A1 in the sintered material is preferably 1 atom% or more and 25 atom% or less, and more preferably 3 atom% or more and 15 atom% or less. The content of Si in the sintered material is preferably 1 atom% or more and 25 atom% or less, and more preferably 3 atom% or more and 15 atom% or less.

The content of A1 and the content of Si in the sintered material may be measured by analysis using ICP atomic emission spectrometry. The specific measurement method may be the same as the measurement method of the atomic ratio of metal element atoms in the powder according to the first embodiment.

Preferably, the sintered material further contains at least one bonding compound which is composed of at least one second metal element selected from the group consisting of group 4 elements, group 5 elements and group 6 elements in the periodic table, and at least one element of carbon, nitrogen and oxygen. In the present specification, as examples of the second metal element, group 4 elements in the periodic table such as titanium (Ti), zirconium (Zr) and hafnium (Hf), group 5 elements in the periodic table such as vanadium (V), niobium (Nb) and tantalum (Ta), and group 6 elements in the periodic table such as chromium (Cr), molybdenum (Mo) and tungsten (W) may be given.

The bonding compound in the sintered material is present at the interface between adjacent powder-derived materials and plays a role of a bonding phase.

Since the bonding phase can strongly bond the powder-derived materials to each other, the strength of the sintered material is improved, which makes it possible to further improve the wear resistance of the sintered material.

Further, by adding the bonding phase to the sintered material, the sintered material may have the characteristics of the powder-derived material and the characteristics of the bonding phase. Therefore, by appropriately adjusting the composition of the bonding phase, the sintered material may be adapted to meet various cutting requirements.

As examples of a bonding compound (carbide) composed of the second metal element and carbon, titanium carbide (TiC), zirconium carbide (ZrC), hafnium carbide (HfC), vanadium carbide (VC), niobium carbide (NbC), tantalum carbide (TaC), chromium carbide (Cr₃C₂), molybdenum carbide (MoC), and tungsten carbide (WC) may be given.

As examples of a bonding compound (nitride) composed of the second metal element and nitrogen, titanium nitride (TiN), zirconium nitride (ZrN), hafnium nitride (HfN), vanadium nitride (VN), niobium nitride (NbN), tantalum nitride (TaN), chromium nitride (Cr₂N), molybdenum nitride (MoN), tungsten nitride (WN), titanium zirconium nitride (TiZrN), titanium hafnium nitride (TiHfN), titanium vanadium nitride (TiVN), titanium niobium nitride (TiNbN), titanium tantalum nitride (TiTaN), titanium chromium nitride (TiCrN), titanium molybdenum nitride (TiMoN), titanium tungsten nitride (TiWN), zirconium hafnium nitride (ZrHfN), zirconium vanadium nitride (ZrVN), zirconium niobium nitride (ZrNbN), zirconium tantalum nitride (ZrTaN), zirconium chromium nitride (ZrCrN), zirconium molybdenum nitride (ZrMoN), zirconium tungsten nitride (ZrWN), hafnium vanadium nitride (HfVN), hafnium niobium nitride (HfNbN), hafnium tantalum nitride (HfTaN), Hafnium chromium nitride (HfCrN), hafnium molybdenum nitride (HfMoN), hafnium tungsten nitride (HfWN), vanadium niobium nitride (VNbN), vanadium tantalum nitride (VTaN), vanadium chromium nitride (VCrN), vanadium molybdenum nitride (VMoN), vanadium tungsten nitride (VWN), niobium tantalum nitride (NbTaN), niobium chromium nitride (NbCrN), niobium molybdenum nitride (NbMoN), niobium tungsten nitride (NbWN), tantalum chromium nitride (TaCrN), tantalum molybdenum nitride (TaMoN), tantalum tungsten nitride (TaWN), chromium molybdenum nitride (CrMoN), chromium tungsten nitride (CrWN), and molybdenum chromium nitride (MoWN) may be given.

As examples of a bonding compound (oxide) composed of the second metal element and oxygen, titanium oxide (TiO₂), zirconium oxide (ZrO₂), hafnium oxide (HfO₂), vanadium oxide (V₂O₅), niobium oxide (Nb₂O₅), tantalum oxide (Ta₂O₅), chromium oxide (Cr₂O₃), molybdenum oxide (MoO₃), tungsten oxide (WO₃) may be given.

As examples of a bonding compound (carbonitride) composed of the second metal element, carbon and nitrogen, titanium carbonitride (TiCN), zirconium carbonitride (ZrCN), and hafnium carbonitride (HfCN) may be given.

As examples of a bonding compound (oxynitride) formed from the second metal element, oxygen and nitrogen, titanium oxynitride (TiON), zirconium oxynitride (ZrON), hafnium oxynitride (HfON), vanadium oxynitride (VON), niobium oxynitride (NbON), tantalum oxynitride (TaON), chromium oxynitride (CrON), molybdenum oxynitride (MoON), and tungsten oxynitride (WON) may be given.

The bonding compound may be used in one kind or may be used in a combination of two kinds or more.

The content of the bonding compound in the sintered material is preferably 0.5 vol% or more and 50 vol% or less, more preferably 15 vol% or more and 45 vol% or less, and further preferably 30 vol% or more and 40 vol% or less.

Preferably, the rate x2/y2 of the atomic ratio x2 of metal element atoms to the atomic ratio y2 of non-metal element atoms in the bonding compound is 1 or more. In the present specification, the atomic ratio x2 of metal element atoms refers to the ratio of the total number of metal element atoms to the total number of atoms in the bonding compound. The atomic ratio y2 of non-metal element atoms refers to the ratio of the total number of non-metal element atoms to the total number of atoms in the bonding compound. In other words, in the bonding compound of the present embodiment, the atomic ratio of metal element atoms is preferably the same as or larger than the atomic ratio of non-metal element atoms. Note that the term "metal element" and the term "non-metal element" are the same as those described in the first embodiment.

When the atomic ratio of metal element atoms is the same as or larger than the atomic ratio of non-metal element atoms in the bonding compound, the excessive metal element reacts with the excessive non-metal element in the powder-derived material, which increases the bonding strength, and thereby improves the fracture resistance.

The atomic ratio x2 of metal element atoms and the atomic ratio y2 of non-metal element atoms in the bonding compound may be measured by the following method. The powder-derived material and the bonding compound are observed under a scanning transmission electron microscope (STEM) and separated by element mapping. When the powder-derived material and the bonding compound contain the same elements, the bonding compound is determined by identifying the crystal structure thereof based on the electron diffraction pattern. The bonding compound is quantified via spot analysis. Specifically, the spot analysis is performed at 20 spots, the atomic ratio of metal element atoms and the atomic ratio of non-metal element atoms are measured at each spot, and the average value of the atomic ratios of metal element atoms measured respectively at 20 spots and the average value of the atomic ratios of non-metal element atoms measured respectively at 20 spots are used as x2 and y2, respectively. As an example STEM, "JEM-ARM300F" manufactured by JOEL Ltd may be used.

The atomic ratio x2 of metal element atoms in the bonding compound is preferably 50 atom% or more and 53 atom% or less, and more preferably 51 atom% or more and 52 atom% or less.

The atomic ratio y2 of non-metal element atoms in the bonding compound is preferably 47 atom% or more and 50 atom% or less, and more preferably 48 atom% or more and 49 atom% or less.

The rate x2/y2 of the atomic ratio x2 of metal element atoms to the atomic ratio y2 of non-metal element atoms is preferably 1 or more and 1.13 or less, more preferably 1.02 or more and 1.10 or less, and further preferably 1.04 or more and 1.06 or less.

The sintered material further contains cubic boron nitride preferably at 10 vol% or more and 97 vol% or less, more preferably at 30 vol% or more and 65 vol% or less, and further preferably at 45 vol% or more and 55 vol% or less.

Since cubic boron nitride has extremely high hardness, the inclusion of cubic boron nitride in the sintered material increases the hardness of the sintered material, which thereby improves the wear resistance of the sintered material.

The sintered material of the present embodiment may be used to manufacture a tool. Since the sintered material is excellent in wear resistance, a tool made of the sintered material is also excellent in wear resistance.

As examples of a tool, a cutting tool, a grinding tool, an abrasion-resistant tool, and a friction stirring/welding tool may be given. As examples of a cutting tool, a drill, an end mill, a cutting tip with an exchangeable cutting edge used in milling machining, a cutting tip with an exchangeable cutting edge used in turning machining, a metal saw, a tooth cutting tool, a reamer, and a tap may be given. The entire part of a cutting tool may be made of the sintered material of the present embodiment, or a part thereof (such as the cutting edge) may be made of the sintered material of the present embodiment.

When the entire part of the cutting tool is made of the sintered material of the present embodiment, the cutting tool may be manufactured by machining the sintered material into a desired shape. The sintered material may be processed, for example, by laser machining or wire electric discharge machining. When a part of the cutting tool is made of the sintered material of the present embodiment, the cutting tool may be manufactured by joining the sintered material to a desired position of a base body of the cutting tool. Although the method of joining the sintered material is not particularly limited, from the viewpoint of preventing the sintered material from detaching from the base body, it is preferable to dispose a joining layer between the substrate and the sintered material so as to strongly join the substrate and the sintered material.

### <Third Embodiment: Powder Producing Method >

A powder producing method according to an embodiment of the present disclosure includes a step of preparing a first particle group which contains particles formed of at least one first metal element selected from the group consisting of group 4 elements, group 5 elements and group 6 elements in the periodic table (hereinafter, also referred to as the "first particle group preparing step"), and a step of treating the first particle group by a shock compression method under a nitrogen atmosphere to produce the powder (hereinafter, referred to as the "powder producing step").

### (First Particle Group Preparing Step)

In the first particle group preparing step, a first particle group which contains particles formed of at least one first metal element selected from the group consisting of group 4 elements, group 5 elements and group 6 elements in the periodic table is prepared. Each of these particles preferably has an average particle size of 2 µm or less, and more preferably 1 µm or less. In the present specification, the term "average particle size" refers to such a value that is measured by using a particle size distribution measuring apparatus such as a particle size and shape analyzer manufactured by Microtrac Co., Ltd.

The first particle group is used as a raw material to produce the powder. The metal elements in the powder are supplied only from the first particle group. Thus, the content of each metal element in the first particle group is required to be the same as the content of each metal element in the powder to be produced. On the other hand, nitrogen in the powder is supplied from an atmosphere (nitrogen atmosphere). Therefore, the content of nitrogen in the first particle group is not required to be the same as the content of nitrogen in the powder. Similar to nitrogen, oxygen in the powder is supplied from an atmosphere (oxygen-nitrogen mixed gas). Therefore, the content of oxygen in the first particle group is not required to be the same as the content of oxygen in the powder.

The first particle group may be prepared by dispersing, by the way of ultrasonic waves, particles formed of at least one first metal element selected from the group consisting of group 4 elements, group 5 elements and group 6 elements in the periodic table in an organic solvent such as ethanol or by pulverizing and mixing the same with a bead mill in an organic solvent such as ethanol to prepare a slurry, and drying the slurry with a dryer or the like.

### (Powder Producing Step)

Next, in the powder producing step, the first particle group is subjected to a shock compression in a nitrogen atmosphere to produce the powder.

First, the first particle group is filled into a Pt capsule. Then, the Pt capsule is filled with nitrogen gas or nitrogen-oxygen mixture gas, caulked and sealed with a silver brazing material, and subjected to a heat treatment in an atmosphere of nitrogen gas or nitrogen-oxygen mixture gas at a pressure of 0.1 MPa or more and 0.6 MPa or less.

Next, the Pt capsule sealed with nitrogen gas or nitrogen-oxygen mixture gas is placed in a stainless steel (SUS) capsule, and treated at a pressure of 15 GPa or more and a temperature of 1500°C or more in a general one-stage flame bombardment compression apparatus. Thus, a powder having a cubic structure is synthesized from the first particle group. The pressure in the shock compression is preferably 15 GPa or more and 50 GPa or less, and more preferably 20 GPa or more and 40 GPa or less. The temperature in the shock compression is preferably 1500°C or more and 3000°C or less, and more preferably 2000°C or more and 2500°C or less.

The obtained powder is preferably pulverized to an average particle size of 0.1 µm or more and 10 µm or less by a ball mill, a bead mill or the like. The powder may be used as a raw material to prepare the sintered material.

### <Fourth Embodiment: Method of Producing Sintered Material>

A method of producing a sintered material according to an embodiment of the present disclosure includes a step of producing a powder (hereinafter, also referred to as the "powder producing step") by using the powder producing method described in the third embodiment, a step of preparing a second particle group containing the powder (hereinafter, also referred to as the "second particle group preparing step"), and a step of sintering the second particle group to produce a sintered material (also referred to as the "sintered material producing step").

### (Powder Producing Step)

In the powder producing step, a powder is produced by using the powder producing method described above. A specific method is the same as that of the powder producing method of the third embodiment.

### (Second Particle Group Preparing Step)

Next, a second particle group containing the powder obtained in the powder producing step is prepared.

The second particle group may contain only the powder, i.e., contain the powder at 100 vol%. In addition to the powder, the second particle group may contain one or both of the bonding compound particles and the cubic boron nitride particles.

In the case where the second particle group contains the bonding compound particles, the content of the bonding compound particles in the second particle group is preferably 0.5 vol% or more and 50 vol% or less, more preferably 15 vol% or more and 45 vol% or less, and further preferably 30 vol% or more and 40 vol% or less. Thereby, the wear resistance of the sintered material obtained by sintering the second particle group is improved.

In the case where the second particle group contains the cubic boron nitride particles, the content of the cubic boron nitride particles in the second particle group is preferably 10 vol% or more and 97 vol% or less, more preferably 30 vol% or more and 65 vol% or less, and further preferably 45 vol% or more and 55 vol% or less. Thereby, the wear resistance of the sintered material obtained by sintering the second particle group is improved.

In the case where the second particle group contains one or both of the bonding compound particles and the cubic boron nitride particles, the second particle group is preferably mixed by using a ball mill or a jet mill. The average particle size of the second particle group is preferably 0.1 µm or more and 10 µm or less.

### (Sintered Material Producing Step)

The sintered material is produced by treating the second particle group at a pressure of 10 GPa or more and 15 GPa or less and a temperature of 800°C or more and 1900°C or less. The sintered material producing step is preferably carried out in a non-oxidizing atmosphere such as vacuum or a nitrogen atmosphere. The sintering method is not particularly limited, a discharge plasma sintering (SPS) method, a hot pressing method, an ultrahigh pressure pressing method or the like may be used.

The resulting sintered material maintains the same content as that of each element in the second particle group.

### <Examples>

The present disclosure will be described in more detail with reference to examples. However, the present disclosure is not intended to be limited by the examples.

### [Example 1]

### (Sample No. 102-104, 106, 107 and 109-123.)

### <Preparation of First Particle Group>

Commercially available titanium nitride particles ("TiN-01" manufactured by Japan New Metals Co., Ltd), zirconium nitride particles ("ZrN-01" manufactured by Japan New Metals Co., Ltd), hafnium nitride particles ("HfN-O" manufactured by Japan New Metals Co., Ltd), vanadium nitride particles ("VN-O" manufactured by Japan New Metals Co., Ltd), niobium nitride particles ("NbN-O" manufactured by Japan New Metals Co., Ltd), tantalum nitride particles ("TaN-O" manufactured by Japan New Metals Co., Ltd), chromium nitride particles ("Cr₂N-O" manufactured by Japan New Metals Co., Ltd), and aluminum particles ("#700F" manufactured by MINALCO Co., Ltd, and simply denoted as "Al" in Table 1), silicon particles ("No. 700" manufactured by Yamaishi Metal Co., Ltd, and simply denoted as "Si" in Table 1) were prepared in the respective amount listed in the column of "Amount" under the column of "First Particle Group Raw Particles" in Table 1 and filled into a Pt capsule, respectively. Then, the Pt capsule was filled with nitrogen gas, caulked and sealed with a silver brazing material, and subjected to a heat treatment at a pressure (0.1 MPa to 0.6 MPa) listed in the column of "Nitrogen Pressure" in Table 1.

### <Powder Producing Step>

Next, the Pt capsule sealed with nitrogen as prepared in the above was placed in a stainless steel (SUS) capsule and subjected to a shock compression at a set pressure of 30 GPa and a set temperature of 1500°C in a general one-stage flame bombardment shock compression apparatus to produce the powder.

### <Sintered Material Producing Step>

The powder was collected from the Pt capsule and filled into another Pt capsule. The powder was sintered in a belt-type high-pressure generator under the conditions of 7 GPa and 1500°C for 30 minutes to prepare the sintered material.

### (Sample No. 101)

The sintered material of sample No. 101 was obtained by preparing commercially available titanium nitride powder ("TiN-01" manufactured by Japan New Metals Co., Ltd) in the amount listed in the column of "Amount" under the column of "First Particle Group Raw Particles" in Table 1, filling the same into a Pt capsule, and sintering the same in a belt-type high-pressure generator under the conditions of 7 GPa and 1500°C for 30 minutes.

### (Sample No. 105 and No. 108)

The sintered material of sample No. 105 and No. 108 respectively was obtained by preparing commercially available titanium nitride powder ("TiN-01" manufactured by Japan New Metals Co., Ltd) and zirconium nitride powder ("ZrN-01" manufactured by Japan New Metals Co., Ltd) in the respective amount listed in the column of "Amount" under the column of "First Particle Group Raw Particles" in Table 1, filling the same into a diamond anvil, and sintering the same in a nitrogen atmosphere under the conditions of 18 GPa and 3073°C for 15 minutes.

### <Analytical Evaluation>

The powder (commercially available titanium nitride powder in the case of sample No. 101 and No. 105, or commercially available zirconium nitride powder in the case of sample No. 108) and the sintered material obtained above were measured by an X-ray diffractometer, and it was confirmed that all the powder and the sintered material had a cubic structure. The powder and the sintered material obtained above were measured by an X-ray diffractometer. The peak intensity ratio of each phase was consistent between the powder and the sintered material. In other words, it was confirmed that the content of each element in the sintered material is maintained the same as the content of each element in the powder.

Regarding the powder prepared by pulverizing the sintered material obtained above, the atomic ratio of atoms of each metal element was analyzed by ICP emission spectrometry (using "ICPS-8100" manufactured by Shimadzu Corporation), and the atomic ratio of atoms of each non-metal element was analyzed by gas analysis (using "EMG950" manufactured by Horiba). The specific measurement is the same as the measurement of the atomic ratio of metal element atoms in the powder and the atomic ratio of non-metal element atoms in the powder described in the first embodiment, and thus the description thereof will not be repeated. In the present example, since the first particle group only contains the powder, the powder prepared by pulverizing the sintered material only contains the powder-derived material. The results are shown in the column of "Measured Value of Sintered Material (Powder-Derived Material)" in Table 1. From the measurement results of the powder and the sintered material with an X-ray diffractometer, it was confirmed that the atomic ratio of atoms of each metal element and the atomic ratio of atoms of each non-metal element in the sintered material were the same as the atomic ratio of atoms of each metal element and the atomic ratio of atoms of each non-metal element in the powder, respectively.

The atomic ratio of atoms of each metal element and the atomic ratio of atoms of each non-metal element were used to calculate the atomic ratio x1 of metal element atoms and the atomic ratio yl of non-metal element atoms, respectively, and then the rate yl/xl between the atomic ratio yl of non-metal element atoms and the atomic ratio x1 of metal element atoms was calculated. The results are shown in the column of "yl/xl" in Table 1.

### <Cutting Evaluation>

The obtained sintered material was cut with a laser and finishing machined to prepare a cutting tool with a model number DNGA150408. The obtained cutting tool was subjected to a cutting test of cutting carburized steel (SCM415H with hardness of HRC60) under the following cutting conditions so as to evaluate the wear resistance:
cutting speed: 300m/min,
cutting depth: 0.15mm,
feeding rate: 0.15mm/rev, and
cutting oil: none.

The wear resistance of the cutting tool was evaluated by the following method. After the cutting tool was used to cut the carburized steel for 1 km under the above cutting conditions, and the flank face of the cutting edge was observed with an optical microscope so as to measure the wear width of the flank face. This process was repeated until the wear width of the flank face reaches 0.2 mm, and the cutting distance at the time when the wear width of the flank face reaches 0.2 mm is defined as the tool life. In practice, a straight line graph is drawn in which the horizontal axis represents the cutting distance and the vertical axis represents the wear width of the flank face, and an intersection point between a line of 0.2 mm drawn from the vertical axis and the straight line graph is determined as the cutting distance. The longer the cutting distance is, the better the wear resistance is.

The results are shown in the column of "Cutting Distance" in Table 1.

**Table 1**

| Sample No. | First Particle Group Raw Particles | | Nitrogen Heat Treatment | Measured Value of Sintered Material (Powder-Drived Material) | | | | | | | | | | | y1/x1 | Cutting Distance (km) |
|---|---|---|---|---|---|---|---|---|---|---|---|---|---|---|---|---|
| | | | | Metal Element (atom%) | | | | | | | | | Non-Metal Element (atom%) | | | |
| | Type | Amount (g) | Nitrogen Pressure (MPa) | Ti | Zr | Hf | V | Nb | Ta | Cr | Al | Si | O | N | | |
| 101 | TiN-01 | 0.5 | | 50.00 | - | - | - | - | - | - | - | - | - | 50.00 | 1.00 | 4.0 |
| 102 | TiN-01 | 0.5 | 0.1 | 46.88 | - | - | - | - | - | - | - | - | - | 53.13 | 1.13 | 7.0 |
| 103 | TiN-01 | 0.5 | 0.3 | 44.78 | - | - | - | - | - | - | - | - | - | 55.22 | 1.23 | 7.6 |
| 104 | TiN-01 | 0.5 | 0.6 | 44.12 | - | - | - | - | - | - | - | - | - | 55.88 | 1.27 | 6.9 |
| 105 | TiN-01 | 0.5 | | 42.86 | - | - | - | - | - | - | - | - | - | 57.14 | 1.33 | 5.4 |
| 106 | ZrN-01 | 0.5 | 0.3 | - | 44.78 | - | - | - | - | - | - | - | - | 55.22 | 1.23 | 7.5 |
| 107 | ZrN-01 | 0.5 | 0.6 | - | 44.12 | - | - | - | - | - | - | - | - | 55.88 | 1.27 | 7.4 |
| 108 | ZrN-01 | 0.5 | - | - | 42.86 | - | - | - | - | - | - | - | - | 57.14 | 1.33 | 5.2 |
| 109 | HfN-0 | 0.5 | 0.3 | - | - | 44.78 | - | - | - | - | - | - | - | 55.22 | 1.23 | 7.3 |
| 110 | HfN-0 | 0.5 | 0.6 | - | - | 44.12 | - | - | - | - | - | - | - | 55.88 | 1.27 | 7.2 |
| 111 | VN-0 | 0.5 | 0.3 | - | - | - | 44.78 | - | - | - | - | - | - | 55.22 | 1.23 | 7.5 |
| 112 | VN-0 | 0.5 | 0.6 | - | - | - | 44.12 | - | - | - | - | - | - | 55.88 | 1.27 | 7.3 |
| 113 | NbN-0 | 0.5 | 0.3 | - | - | - | - | 44.78 | - | - | - | - | - | 55.22 | 1.23 | 7.3 |
| 114 | NbN-0 | 0.5 | 0.6 | - | - | - | - | 44.12 | - | - | - | - | - | 55.88 | 1.27 | 7.1 |
| 115 | TaN-0 | 0.5 | 0.3 | - | - | - | - | - | 44.78 | - | - | - | - | 55.22 | 1.23 | 7.5 |
| 116 | TaN-0 | 0.5 | 0.6 | - | - | - | - | - | 44.12 | - | - | - | - | 55.88 | 1.27 | 7.3 |
| 117 | Cr₂N-0 | 0.5 | 0.3 | - | - | - | - | - | - | 44.78 | - | - | - | 55.22 | 1.23 | 7.1 |
| 118 | Cr₂N-0 | 0.5 | 0.6 | - | - | - | - | - | - | 44.12 | - | - | - | 55.88 | 1.27 | 7.0 |
| 119 | TiN-01 | 0.48 | 0.3 | 40.00 | - | - | - | - | - | - | 4.78 | - | - | 55.22 | 1.23 | 7.7 |
| | A1 | 0.02 | | | | | | | | | | | | | | |
| 120 | TiN-01 | 0.47 | 0.3 | 40.00 | - | - | - | - | - | - | - | 4.78 | - | 55.22 | 1.23 | 7.5 |
| | Si | 0.03 | | | | | | | | | | | | | | |
| 121 | TiN-01 | 0.5 | 0.6 | 44.12 | - | - | - | - | - | - | - | - | 10.00 | 45.88 | 1.27 | 6.9 |
| 122 | ZrN-01 | 0.5 | 0.6 | - | 44.12 | - | - | - | - | - | - | - | 10.00 | 45.88 | 1.27 | 6.6 |
| 123 | HfN-0 | 0.5 | 0.6 | - | - | 44.12 | - | - | - | - | - | - | 10.00 | 45.88 | 1.27 | 6.5 |

### <Results>

The sintered material of sample No. 1 contains a powder-derived material made of TiN, and the rate yl/xl of the atomic ratio yl of non-metal element atoms to the atomic ratio x1 of metal element atoms in the powder-derived material is 1, and thus, this sintered material corresponds to a comparative example.

Each sintered material of sample No. 102 to No. 123 contains a powder-derived material made of nitride or oxynitride of Ti, Zr, Hf, V, Nb, Ta or Cr, and the rate yl/xl in the powder-derived material is larger than 1, and thus, each sintered material corresponds to an example.

It was confirmed that a cutting tool made of the sintered material of sample No. 102 to No. 123 had a longer cutting distance and better wear resistance than a cutting tool made of the sintered material of sample No. 101.

### [Example 2]

### (Sample No. 201 to No. 245)

### <Preparation of Second Particle Group>

The powder of sample No. 103, the powder of sample No. 106 and the powder of sample No. 109 obtained in Example 1, commercially available titanium nitride (TiN) particles ("TiN-01" manufactured by Japan New Metals Co., Ltd), zirconium nitride (ZrN) particles ("ZrN-01" manufactured by Japan New Metals Co., Ltd), vanadium nitride (VN) particles ("VN-O" manufactured by Japan New Metals Co., Ltd), niobium nitride (NbN) particles ("NbN-O" manufactured by Japan New Metals Co., Ltd), tantalum nitride (TaN) particles ("TaN-O" manufactured by Japan New Metals Co., Ltd), chromium nitride (Cr₂N) particles ("Cr₂N-O" manufactured by Japan New Metals Co., Ltd), tantalum carbide (TaC) particles ("TaC" manufactured by Japan New Metals Co., Ltd), titanium carbide (TiC) particles ("TiC-01" manufactured by Japan New Metals Co., Ltd), zirconium carbide (ZrC) particles ("ZrC" manufactured by Japan New Metals Co., Ltd), niobium carbide (NbC) particles ("NbC" manufactured by Japan New Metals Co., Ltd), vanadium carbide (VC) particles ("VC" manufactured by Japan New Metals Co., Ltd), Al₂O₃ particles ("TM-DAR" manufactured by TAIMEI Chemicals Co., Ltd) were prepared in the respective amount listed in the column of "Amount in Second Particle Group", and mixed with a planetary mill so as to produce the second particle group (sintered-material raw particles). Among these particles, the particles other than the powder correspond to the raw materials of the bonding compound.

### <Preparation of Sintered Material>

The second particle group was filled into a Pt capsule and sintered in a belt-type high-pressure generator under the conditions of 7 GPa and 1500°C for 30 minutes to prepare the sintered material.

### <Analytical Evaluation>

The second particle group and the sintered material obtained in the above were measured by an X-ray diffractometer. The peak intensity ratio of each phase was consistent between the second particle group and the sintered material. In other words, it was confirmed that the content of each element in the sintered material is maintained the same as the content of each element in the second particle group.

The atomic ratio x2 of metal element atoms and the atomic ratio y2 of non-metal element atoms in the bonding compound were calculated from the contents of the respective elements in the second particle group, and then the rate x2/y2 between the atomic ratio x2 of metal element atoms and the atomic ratio y2 of non-metal element atoms was calculated. The results are shown in the column of "x2/y2" in Table 2.

### <Cutting Evaluation>

Similar to Example 1, the obtained sintered material was used to prepare a cutting tool, and the wear resistance was evaluated under the same cutting conditions as Example 1. The results are shown in the column of "Cutting Distance" in Table 2.

**Table 2**

| Sample No. | Amount in Second Particle Group (vol%) | | | | | | | | | | | | | | | Bonding Material | | | Cutting Distance (km) |
|---|---|---|---|---|---|---|---|---|---|---|---|---|---|---|---|---|---|---|---|
| | Powder | | | Raw Material for Bonding Material | | | | | | | | | | | | Metal Element | Non-Metal Element | x2/y2 | |
| | Sample 103 | Sample 106 | Sample 109 | TiN | ZrN | VN | NbN | TaN | Cr₂N | TaC | TiC | ZrC | NbC | VC | Al₂O₃ | (atom%) | (atom%) | | |
| 201 | 70 | 0 | 0 | 30 | 0 | 0 | 0 | 0 | 0 | 0 | 0 | 0 | 0 | 0 | 0 | 51 | 49 | 1.04 | 9.0 |
| 202 | 70 | 0 | 0 | 0 | 30 | 0 | 0 | 0 | 0 | 0 | 0 | 0 | 0 | 0 | 0 | 51 | 49 | 1.04 | 8.8 |
| 203 | 70 | 0 | 0 | 0 | 0 | 30 | 0 | 0 | 0 | 0 | 0 | 0 | 0 | 0 | 0 | 51 | 49 | 1.04 | 8.7 |
| 204 | 70 | 0 | 0 | 0 | 0 | 0 | 30 | 0 | 0 | 0 | 0 | 0 | 0 | 0 | 0 | 51 | 49 | 1.04 | 8.5 |
| 205 | 70 | 0 | 0 | 0 | 0 | 0 | 0 | 30 | 0 | 0 | 0 | 0 | 0 | 0 | 0 | 51 | 49 | 1.04 | 8.9 |
| 206 | 70 | 0 | 0 | 0 | 0 | 0 | 0 | 0 | 30 | 0 | 0 | 0 | 0 | 0 | 0 | 51 | 49 | 1.04 | 8.6 |
| 207 | 70 | 0 | 0 | 0 | 0 | 0 | 0 | 0 | 0 | 30 | 0 | 0 | 0 | 0 | 0 | 51 | 49 | 1.04 | 8.5 |
| 208 | 70 | 0 | 0 | 0 | 0 | 0 | 0 | 0 | 0 | 0 | 30 | 0 | 0 | 0 | 0 | 51 | 49 | 1.04 | 8.6 |
| 209 | 70 | 0 | 0 | 0 | 0 | 0 | 0 | 0 | 0 | 0 | 0 | 30 | 0 | 0 | 0 | 51 | 49 | 1.04 | 8.8 |
| 210 | 70 | 0 | 0 | 0 | 0 | 0 | 0 | 0 | 0 | 0 | 0 | 0 | 30 | 0 | 0 | 51 | 49 | 1.04 | 8.6 |
| 211 | 70 | 0 | 0 | 0 | 0 | 0 | 0 | 0 | 0 | 0 | 0 | 0 | 0 | 30 | 0 | 51 | 49 | 1.04 | 8.8 |
| 212 | 70 | 0 | 0 | 0 | 0 | 0 | 0 | 0 | 0 | 0 | 0 | 0 | 0 | 0 | 30 | 51 | 49 | 1.04 | 8.5 |
| 213 | 45 | 0 | 0 | 55 | 0 | 0 | 0 | 0 | 0 | 0 | 0 | 0 | 0 | 0 | 0 | 51 | 49 | 1.04 | 5.5 |
| 214 | 90 | 0 | 0 | 10 | 0 | 0 | 0 | 0 | 0 | 0 | 0 | 0 | 0 | 0 | 0 | 51 | 49 | 1.04 | 7.6 |
| 215 | 99.8 | 0 | 0 | 0.2 | 0 | 0 | 0 | 0 | 0 | 0 | 0 | 0 | 0 | 0 | 0 | 51 | 49 | 1.04 | 7.6 |
| 216 | 0 | 70 | 0 | 30 | 0 | 0 | 0 | 0 | 0 | 0 | 0 | 0 | 0 | 0 | 0 | 51 | 49 | 1.04 | 8.8 |
| 217 | 0 | 70 | 0 | 0 | 30 | 0 | 0 | 0 | 0 | 0 | 0 | 0 | 0 | 0 | 0 | 51 | 49 | 1.04 | 8.6 |
| 218 | 0 | 70 | 0 | 0 | 0 | 30 | 0 | 0 | 0 | 0 | 0 | 0 | 0 | 0 | 0 | 51 | 49 | 1.04 | 8.5 |
| 219 | 0 | 70 | 0 | 0 | 0 | 0 | 30 | 0 | 0 | 0 | 0 | 0 | 0 | 0 | 0 | 51 | 49 | 1.04 | 8.3 |
| 220 | 0 | 70 | 0 | 0 | 0 | 0 | 0 | 30 | 0 | 0 | 0 | 0 | 0 | 0 | 0 | 51 | 49 | 1.04 | 8.7 |
| 221 | 0 | 70 | 0 | 0 | 0 | 0 | 0 | 0 | 30 | 0 | 0 | 0 | 0 | 0 | 0 | 51 | 49 | 1.04 | 8.4 |
| 222 | 0 | 70 | 0 | 0 | 0 | 0 | 0 | 0 | 0 | 30 | 0 | 0 | 0 | 0 | 0 | 51 | 49 | 1.04 | 8.3 |
| 223 | 0 | 70 | 0 | 0 | 0 | 0 | 0 | 0 | 0 | 0 | 30 | 0 | 0 | 0 | 0 | 51 | 49 | 1.04 | 8.4 |
| 224 | 0 | 70 | 0 | 0 | 0 | 0 | 0 | 0 | 0 | 0 | 0 | 30 | 0 | 0 | 0 | 51 | 49 | 1.04 | 8.6 |
| 225 | 0 | 70 | 0 | 0 | 0 | 0 | 0 | 0 | 0 | 0 | 0 | 0 | 30 | 0 | 0 | 51 | 49 | 1.04 | 8.4 |
| 226 | 0 | 70 | 0 | 0 | 0 | 0 | 0 | 0 | 0 | 0 | 0 | 0 | 0 | 30 | 0 | 51 | 49 | 1.04 | 8.6 |
| 227 | 0 | 70 | 0 | 0 | 0 | 0 | 0 | 0 | 0 | 0 | 0 | 0 | 0 | 0 | 30 | 51 | 49 | 1.04 | 8.3 |
| 228 | 0 | 45 | 0 | 55 | 0 | 0 | 0 | 0 | 0 | 0 | 0 | 0 | 0 | 0 | 0 | 51 | 49 | 1.04 | 5.3 |
| 229 | 0 | 90 | 0 | 10 | 0 | 0 | 0 | 0 | 0 | 0 | 0 | 0 | 0 | 0 | 0 | 51 | 49 | 1.04 | 7.4 |
| 230 | 0 | 99.8 | 0 | 0.2 | 0 | 0 | 0 | 0 | 0 | 0 | 0 | 0 | 0 | 0 | 0 | 51 | 49 | 1.04 | 7.4 |
| 231 | 0 | 0 | 70 | 30 | 0 | 0 | 0 | 0 | 0 | 0 | 0 | 0 | 0 | 0 | 0 | 51 | 49 | 1.04 | 8.6 |
| 232 | 0 | 0 | 70 | 0 | 30 | 0 | 0 | 0 | 0 | 0 | 0 | 0 | 0 | 0 | 0 | 51 | 49 | 1.04 | 8.7 |
| 233 | 0 | 0 | 70 | 0 | 0 | 30 | 0 | 0 | 0 | 0 | 0 | 0 | 0 | 0 | 0 | 51 | 49 | 1.04 | 8.5 |
| 234 | 0 | 0 | 70 | 0 | 0 | 0 | 30 | 0 | 0 | 0 | 0 | 0 | 0 | 0 | 0 | 51 | 49 | 1.04 | 8.4 |
| 235 | 0 | 0 | 70 | 0 | 0 | 0 | 0 | 30 | 0 | 0 | 0 | 0 | 0 | 0 | 0 | 51 | 49 | 1.04 | 8.2 |
| 236 | 0 | 0 | 70 | 0 | 0 | 0 | 0 | 0 | 30 | 0 | 0 | 0 | 0 | 0 | 0 | 51 | 49 | 1.04 | 8.6 |
| 237 | 0 | 0 | 70 | 0 | 0 | 0 | 0 | 0 | 0 | 30 | 0 | 0 | 0 | 0 | 0 | 51 | 49 | 1.04 | 8.3 |
| 238 | 0 | 0 | 70 | 0 | 0 | 0 | 0 | 0 | 0 | 0 | 30 | 0 | 0 | 0 | 0 | 51 | 49 | 1.04 | 8.2 |
| 239 | 0 | 0 | 70 | 0 | 0 | 0 | 0 | 0 | 0 | 0 | 0 | 30 | 0 | 0 | 0 | 51 | 49 | 1.04 | 8.3 |
| 240 | 0 | 0 | 70 | 0 | 0 | 0 | 0 | 0 | 0 | 0 | 0 | 0 | 30 | 0 | 0 | 51 | 49 | 1.04 | 8.5 |
| 241 | 0 | 0 | 70 | 0 | 0 | 0 | 0 | 0 | 0 | 0 | 0 | 0 | 0 | 30 | 0 | 51 | 49 | 1.04 | 8.3 |
| 242 | 0 | 0 | 70 | 0 | 0 | 0 | 0 | 0 | 0 | 0 | 0 | 0 | 0 | 0 | 30 | 51 | 49 | 1.04 | 8.5 |
| 243 | 0 | 0 | 45 | 55 | 0 | 0 | 0 | 0 | 0 | 0 | 0 | 0 | 0 | 0 | 0 | 51 | 49 | 1.04 | 8.2 |
| 244 | 0 | 0 | 90 | 10 | 0 | 0 | 0 | 0 | 0 | 0 | 0 | 0 | 0 | 0 | 0 | 51 | 49 | 1.04 | 5.2 |
| 245 | 0 | 0 | 99.8 | 0.2 | 0 | 0 | 0 | 0 | 0 | 0 | 0 | 0 | 0 | 0 | 0 | 51 | 49 | 1.04 | 7.3 |

### <Results>

Each sintered material of sample No. 201 to No. 203 contains a powder of TiN, ZrN or HfN (y 1/x 1 > 1) and a bonding compound containing a nitride or carbide of Ti, Zr, V, Nb, Ta or Cr or containing Ah03, and the rate yl/xl and the rate x2/y2 are larger than 1, and thus, each sintered material corresponds to an example. It was confirmed that a cutting tool made of the sintered material of sample No. 201 to No. 203 had a longer cutting distance and better wear resistance than the cutting tool made of the sintered material of sample No. 101 (corresponding to the comparative example) obtained in Example 1.

### [Example 3]

### (sample No. 301 to No. 323)

### <Preparation of Second Particle group>

The powder of sample No. 103, the powder of sample No. 106 and the powder of sample No. 109 obtained in Example 1, TiN particles, ZrN particles, VN particles, NbN particles, TaN particles, Cr₂N particles, TaC particles, TiC particles, ZrC particles, NbC particles, VC particles, Al₂O₃ particles, and cubic boron nitride ("FBN-AM 0-2" manufactured by Global Diamonds Co., Ltd) which are commercially available and used in Example 2 were prepared in the respective amount listed in the column of "Amount in Second Particle Group", and mixed with a planetary mill so as to produce the second particle group. Among these particles, the particles other than the powder correspond to the raw materials of the bonding compound.

### <Preparation of Sintered Material>

The second particle group was filled into a Pt capsule and sintered in a belt-type high-pressure generator under the conditions of 7 GPa and 1500°C for 30 minutes to prepare the sintered material.

### <Analytical Evaluation>

The second particle group and the sintered material obtained in the above were measured by an X-ray diffractometer. The peak intensity ratio of each phase was consistent between the second particle group and the sintered material. In other words, it was confirmed that the content of each element in the sintered material is maintained the same as the content of each element in the second particle group.

The atomic ratio x2 of metal element atoms and the atomic ratio y2 of non-metal element atoms in the bonding compound were calculated from the contents of the respective elements in the second particle group, and then the rate x2/y2 between the atomic ratio x2 of metal element atoms and the atomic ratio y2 of non-metal element atoms was calculated. The results are shown in the column of "x2/y2" in Table 3.

### <Cutting Evaluation>

Similar to Example 1, the obtained sintered material was used to prepare a cutting tool, and the wear resistance was evaluated under the same cutting conditions as Example 1. The results are shown in the column of "Cutting Distance" in Table 3.

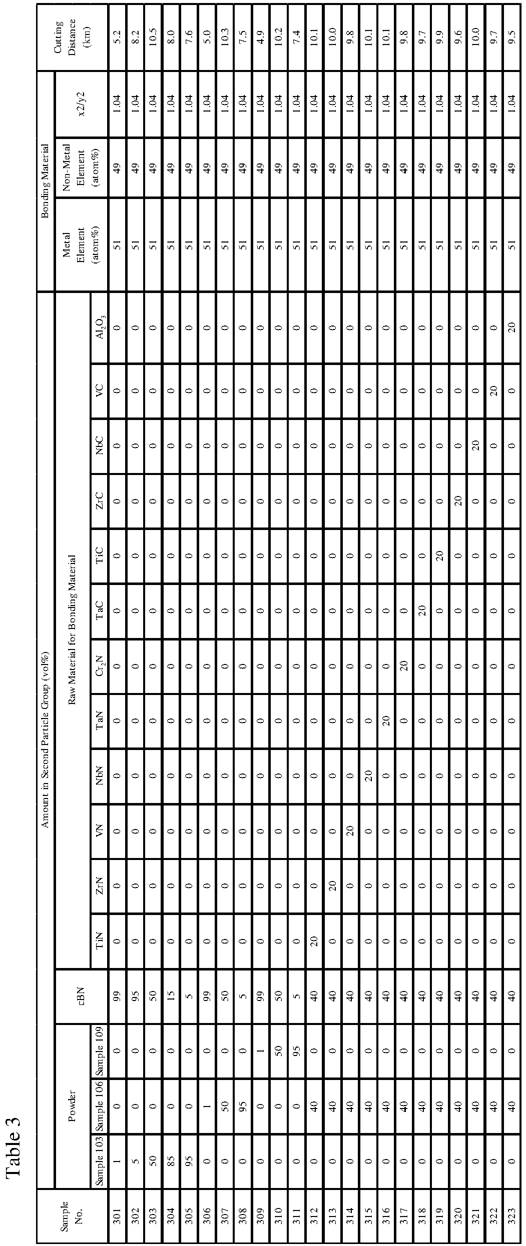

### <Results>

Each sintered material of sample No. 301 to No. 323 contains a powder of TiN, ZrN or HfN (y1/x1>1), cubic boron nitride, and a bonding compound containing a nitride or carbide of Ti, Zr, V, Nb, Ta or Cr or containing Al₂O₃, and the rate yl/xl and the rate x2/y2 are larger than 1, and thus, each sintered material corresponds to an example. It was confirmed that a cutting tool made of the sintered material of sample No. 301 to No. 323 had a longer cutting distance and better wear resistance than a cutting tool made of the sintered material of sample No. 101 obtained in Example 1.

Embodiments and specific examples of the present invention are described above. However, proper combinations of the constitutions of the respective embodiments and the respective specific examples are also originally intended.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in meaning and scope to the claims.

## Claims

1. A sintered material comprising:
a powder-derived material containing one or both of a nitride and an oxynitride, each of which contains at least one first metal element selected from the group consisting of group 4 elements, group 5 elements and group 6 elements in the periodic table,
the rate yl/xl of the atomic ratio yl of non-metal element atoms in the powder-derived material to the atomic ratio x1 of metal element atoms therein being greater than 1, and
the powder-derived material having a cubic structure.

2. The sintered material according to claim 1, wherein
the rate yl/xl is 1.1 or more and 1.3 or less.

3. The sintered material according to claim 1 or 2, wherein
the sintered material further contains one or both of A1 and Si.

4. The sintered material according to any one of claims 1 to 3, wherein
the sintered material further contains at least one bonding compound at 0.5 vol% or more and 50 vol% or less in total,
the bonding compound is composed of at least one second metal element selected from the group consisting of group 4 elements, group 5 elements and group 6 elements in the periodic table, and at least one element of carbon, nitrogen and oxygen, and
the rate x2/y2 of the atomic ratio x2 of metal element atoms in the bonding compound to the atomic ratio y2 of non-metal element atoms therein is 1 or more.

5. The sintered material according to claim 4, wherein
the rate x2/y2 is 1.04 or more and 1.06 or less.

6. The sintered material according to any one of claims 1 to 5, wherein the sintered material further contains cubic boron nitride at 10 vol% or more and 97 vol% or less.

7. A powder containing:
one or both of a nitride and an oxynitride, each of which contains at least one first metal element selected from the group consisting of group 4 elements, group 5 elements and group 6 elements in the periodic table,
the rate yl/xl of the atomic ratio yl of non-metal element atoms in the powder to the atomic ratio x1 of metal element atoms therein being greater than 1, and
the powder having a cubic structure.

8. The powder according to claim 7, wherein
the rate y1/x1 is 1.1 or more and 1.3 or less.

9. A powder producing method for producing the powder according to claim 7 or 8, the method comprising:
preparing a first particle group which contains particles formed of at least one first metal element selected from the group consisting of group 4 elements, group 5 elements and group 6 elements in the periodic table; and
subjecting the first particle group to a shock compression in a nitrogen atmosphere to produce the powder.
